# FASCICULE DE BREVET EUROPEEN

(11) **EP 2 679 124 B1**
(45) Date de publication et mention de la délivrance du brevet: **04.03.2015**
(21) Numéro de dépôt: 13173890.8
(22) Date de dépôt: 26.06.2013
(51) Int. Cl.: A47J 43/08, A47J 19/02, H02K 5/20

(54) **Gaine de ventilation d'un appareil électroménager**
Entlüftungskanal eines Elektrohaushaltsgeräts
Household appliance ventilation duct

(30) Priorité: 29.06.2012 FR 1256287
(43) Date de publication de la demande: 01.01.2014
(73) Titulaire: SEB S.A., 69130 Ecully (FR)
(72) Inventeur: Lafond, Jean-Marie, 65420 IBOS (FR); Peyras, Lionel, 65100 LOURDES (FR)
(74) Mandataire: Cémeli, Eric Philippe Laurent

(56) Documents cités:
- EP-A1- 1 795 099
- WO-A1-2004/058023
- WO-A1-2009/049355
- KR-A- 20030 085 785
- US-A1- 2008 098 905

## Description

La présente invention concerne de manière générale le refroidissement d'un moteur électrique d'un appareil électroménager de préparation culinaire.

Il est connu dans l'art antérieur des appareils électroménagers de type pressoir à sortie latérale motorisés par un moto-ventilateur électrique. Ainsi, les documents KR 2003 085785 et KR 2003 089736 décrivent des appareils avec un moto-ventilateur horizontal équipé à chaque extrémité de deux carénages ajourés avec des ouïes qui provoquent un guidage préférentiel du flux d'air. Ce dernier chemine depuis l'arrière de l'appareil vers une première extrémité du moto-ventilateur, puis vers la deuxième extrémité du moto-ventilateur, pour être ensuite expulsé vers le bas de l'appareil. Le refroidissement n'est pas très efficace à cause des ouïes qui provoquent des fuites d'air. Par ailleurs, le montage est compliqué car chaque carénage est monté sur un membre support, eux-mêmes montés sur une plaque de base avec des rainures qui portent des pieds : cette multitude de pièces augmente les coûts de fabrication avec de nombreux outillages de production à prévoir, et le temps de montage est conséquent. Enfin, l'expulsion d'air se fait par la plaque de base, et une fois cette dernière posée sur une table par l'utilisateur, le flux d'air en sortant sera redirigé par la table dans toutes les directions, y compris vers l'utilisateur, ce qui provoquera une gêne pour ce dernier, alors que cette fonction de l'appareil devrait passer inaperçue pour l'utilisateur. En effet, la fonction de refroidissement du moteur d'un appareil électroménager n'est pas une fonction attendue par l'utilisateur et doit passer inaperçue pour ce dernier.

Un appareil selon le préambule de la revendication 1 est connu du document US 2008/098905.

Un but de la présente invention est de répondre aux inconvénients des documents de l'art antérieur mentionnés ci-dessus et en particulier, tout d'abord, de proposer un appareil électroménager de préparation culinaire avec un refroidissement efficace qui ne sera pas remarqué par l'utilisateur.

Pour cela un premier aspect de l'invention concerne un appareil électroménager de préparation culinaire comprenant une base motorisée avec une façade agencée à l'avant de l'appareil, la base motorisée comprenant un moto-ventilateur qui crée lors de son fonctionnement un flux d'air de refroidissement du moto-ventilateur, des moyens de guidage d'air agencés autour du moto-ventilateur pour guider le flux d'air de refroidissement depuis une première extrémité du moto-ventilateur vers une deuxième extrémité du moto-ventilateur, les moyens de guidage d'air étant des moyens de canalisation agencés pour canaliser le flux d'air de refroidissement autour du moto-ventilateur vers une sortie orientée vers l'arrière de l'appareil et agencée pour imposer au flux d'air de refroidissement une direction d'expulsion vers l'arrière de l'appareil, les moyens de canalisation étant une gaine de ventilation qui entoure complètement le moto-ventilateur de sorte à le confiner dans la gaine de ventilation,
du fait que la base motorisée comprend un boîtier, que la gaine de ventilation comprend au moins un point de positionnement sur le boîtier, que l'appareil comprend un patin élastique intercalé entre la gaine de ventilation et le boîtier, audit point de positionnement, que la gaine de ventilation comprend un orifice de sortie du flux d'air de refroidissement, que l'orifice de sortie est agencé audit au moins un point de positionnement de la gaine de ventilation sur le boîtier, qui comporte un orifice en regard de l'orifice de sortie de la gaine de ventilation, que le patin élastique est creux, et que le flux d'air de refroidissement passe de l'orifice de sortie de la gaine de ventilation vers l'orifice du boîtier par le patin élastique creux.

L'appareil selon la présente invention présente un refroidissement efficace car le flux d'air de refroidissement n'est pas simplement guidé, il est canalisé autour du moteur sans dispersion du flux d'air, ce qui permet de garantir que tout le flux d'air passe autour du moteur pour le refroidir. Le flux d'air est ensuite canalisé vers une sortie orientée vers l'arrière et agencée de sorte à imposer au flux d'air sortant une direction vers l'arrière. L'utilisateur n'est pas impacté par ce flux d'air dirigé vers l'arrière, si bien que la fonction de refroidissement du moto-ventilateur passe inaperçue de ce dernier.

La gaine de ventilation selon cette mise en oeuvre de l'invention garantit l'absence de dispersion du flux d'air de refroidissement car c'est une canalisation étanche. Un effet bonus de cette mise en oeuvre est la réduction du bruit de fonctionnement car le moto-ventilateur est confiné dans la gaine de ventilation, de sorte que les ondes sonores ne peuvent pas s'échapper, car la gaine est étanche.

Cette mise en oeuvre de l'invention offre un montage qui réduit les vibrations transmises au boîtier, et le confort d'utilisation est augmenté.

La gaine de ventilation selon la présente mise en oeuvre offre l'avantage de cumuler au point de positionnement la fonction de positionnement sur le boîtier et la fonction de passage d'air à travers le patin élastique.

Avantageusement, la gaine de ventilation comprend des moyens de fixation agencés pour maintenir en place le moto-ventilateur dans la base motorisée. La gaine de ventilation porte le moto-ventilateur, on obtient un sous ensemble aisé à manipuler lors de la fabrication de l'appareil selon la présente invention.

Une réalisation particulièrement intéressante consiste en ce que la base motorisée présente une plaque extérieure de décor formant au moins partiellement la façade, et en ce que le flux d'air de refroidissement est canalisé par la gaine de ventilation depuis la deuxième extrémité du moto-ventilateur vers la plaque extérieure de décor qui le redirige vers la sortie. Les moyens de canalisation utilisent la plaque extérieure de décor pour former une partie de la canalisation du flux d'air de refroidissement, ce qui réduit le nombre de pièces nécessaires pour offrir la fonction. Le coût de fabrication est réduit, en utilisant cette pièce de l'appareil déjà présente.

Avantageusement, la plaque extérieure est fixée sur le boîtier, le boîtier comporte une échancrure formant un espace entre la plaque extérieure et l'orifice, de sorte que la sortie et l'orifice soient agencés sur la même pièce du boîtier. Le boîtier lui-même est agencé pour former une partie des moyens de canalisation en laissant un passage pour que le flux d'air soit redirigé par la plaque extérieure, afin de pouvoir agencer l'orifice du boîtier et la sortie sur la même pièce, ce qui simplifie la conception en réduisant le nombre de pièces.

Avantageusement, la sortie est un conduit avec une section et une longueur prédéterminées, et la section présente au moins une dimension inférieure à la moitié de la longueur. Un telle sortie allongée par rapport à sa section redirige efficacement le flux d'air et lui impose la direction d'expulsion vers l'arrière.

L'invention concerne également un appareil électroménager de préparation culinaire, caractérisé :
- **en ce que** la plaque extérieure est métallique ;
- en ce qu'il comprend des pieds agencés pour définir un plan inférieur d'appui sur un plan de travail ;
- en ce que la sortie est agencée derrière la façade ;
- en ce que la sortie est agencée sous l'appareil ;
- en ce qu'il comprend deux pieds agencés sous la façade et en ce que la sortie vers l'arrière est agencée entre les deux pieds ;
- en ce qu'il comprend un axe d'entraînement agencé pour entraîner au moins un outil de travail, et en ce que l'axe d'entraînement est relié au moto-ventilateur par un réducteur ;
- en ce que l'axe d'entraînement est agencé latéralement ;
- en ce que le moto-ventilateur présente un axe de rotation s'étendant au moins principalement dans la direction horizontale.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une coupe d'une vue en perspective d'un appareil selon la présente invention ;
- la figure 2 représente une coupe de l'appareil de la figure 1.

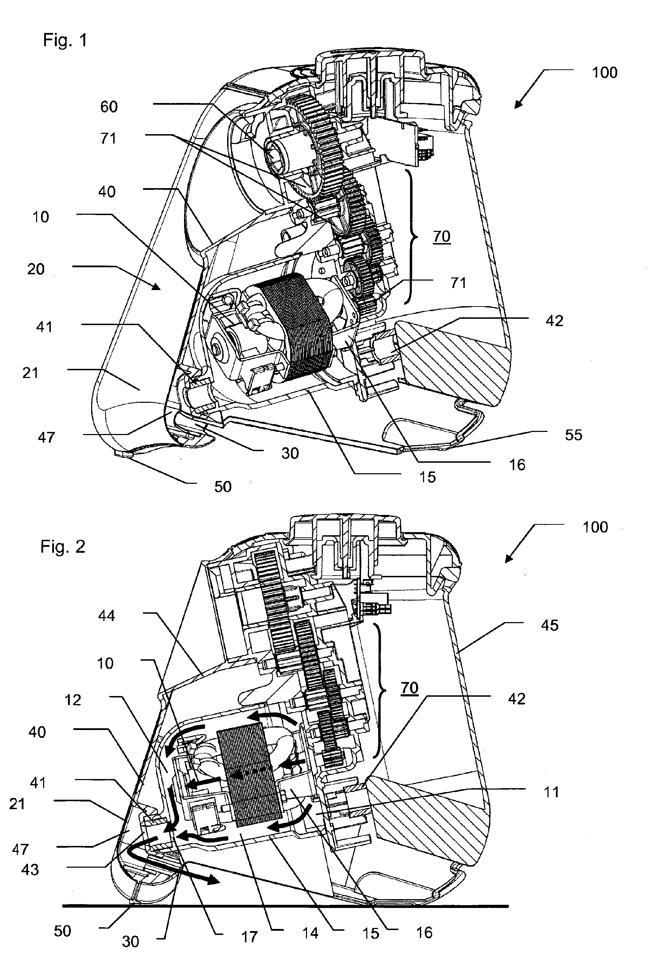

La figure 1 représente une coupe d'une vue en perspective de la base motorisée 100 d'un appareil selon la présente invention. La base motorisée 100 présente une façade 20 avec un axe d'entraînement 60 agencé sensiblement incliné par rapport à l'horizontale et destiné à entraîner divers outils de coupe rotatifs, non représentés. La base motorisée 100 comprend un moto-ventilateur 10 relié à l'axe d'entraînement 60 par une cascade de pignons 71 formant un réducteur 70 afin de faire tourner les outils de coupe à une vitesse de rotation adéquate pour découper des aliments. On peut envisager d'autres types de liaison entre le moto-ventilateur 10 et l'axe d'entraînement 60, tels qu'un réducteur épicycloïdal ou des courroies. La structure porteuse de la base motorisée 100 est un boîtier 40, qui peut être réalisé en pièces plastiques moulées par injection. Le moto-ventilateur 10 est agencé dans une gaine de ventilation 15 dont le principe sera décrit au paragraphe relatif à la figure 2.

Le moto-ventilateur 10 est fixé sur le réducteur 70 par des moyens de fixation 16, et la gaine de ventilation 15 est montée sur le réducteur 70, de sorte que les efforts mécaniques exercés par le moto-ventilateur 10 tels que son couple notamment sont repris par la gaine de ventilation 15 et le réducteur 70, et transmis au boîtier 40 par leur intermédiaire.

Afin de correctement isoler le boîtier 40 des vibrations créées par le moto-ventilateur 10 lors de son fonctionnement, des patins élastiques 41 et 42 sont intercalés entre la gaine de ventilation 15, le réducteur 70 et le boîtier 40. Selon le montage adopté, l'ensemble gaine de ventilation 15 - réducteur 70 est pris en sandwich entre deux éléments de structure du boîtier 40 : un élément de boîtier avant 44 et un élément de boîtier arrière 45 qui sont par exemple assemblés par vissage. La gaine de ventilation 15 porte le patin élastique 41 et le réducteur 70 porte le patin élastique 42.

La façade 20 de la base motorisée 100 est composée d'une plaque extérieure 21 réalisée à partir d'une tôle métallique, et pour des critères de qualité perçue, aucune ouïe de ventilation n'est agencée sur cette face visible. Par ailleurs, la base motorisée 100 est agencée pour reposer sur un plan de travail lors de son utilisation par l'intermédiaire des pieds avant 50 et arrière 55. Ce montage de type trépied offre avantageusement un appui stable et isostatique. Enfin, et comme cela sera expliqué au paragraphe relatif à la figure 2, la sortie de ventilation 30 est agencée derrière la façade 20, sous l'appareil, de sorte qu'elle est invisible pour l'utilisateur et sa forme allongée (un oblong extrudé sur une longueur supérieure au double de son diamètre) permet d'imposer au flux expulsé une direction vers l'arrière de l'appareil.

La figure 2 représente une coupe sagittale de l'appareil de la figure 1. Le moto-ventilateur 10 est confiné dans la gaine de ventilation 15, elle-même reliée d'une part au boîtier 40 par l'intermédiaire du patin élastique 41 et fixée au réducteur 70 d'autre part. Lors de son fonctionnement, le moto-ventilateur 10 crée un flux d'air de refroidissement qui est canalisé par la gaine de ventilation 15 comme représenté par les flèches. La gaine de ventilation 15 assure la fonction de moyens de guidage d'air et de moyens de canalisation d'air en entourant le moto-ventilateur 10. Le flux d'air de refroidissement entre vers la première extrémité 11 du moto-ventilateur 10 par des jeux entre la gaine de ventilation 15 et le réducteur 70 et/ou par une ouverture ménagée dans une paroi de support du réducteur 70. Le flux d'air de refroidissement va ensuite vers la deuxième extrémité 12 opposée du moto-ventilateur 10. Du fait que la gaine de ventilation 15 définit un conduit fermé autour du moto-ventilateur 10, le refroidissement de ce dernier est efficace car il n'y aucune perte ou recirculation d'air. Le flux d'air de refroidissement est ensuite canalisé par la gaine de ventilation 15 vers la face intérieure de la plaque extérieure 21 de la façade au travers une échancrure 47 du boîtier 40, afin d'être redirigé vers la sortie 30. Cette dernière, agencée entre les deux pieds avant 50, sous la base motorisée 100 et derrière la façade 20, est dimensionnée de sorte à imposer une direction d'expulsion du flux d'air de refroidissement vers l'arrière de l'appareil, afin de ne provoquer aucune gêne à l'utilisateur lors du fonctionnement de l'appareil. La sortie 30 est en forme d'un trou oblong (défini par un diamètre et une longueur) orienté vers l'arrière de l'appareil et forme un conduit dont la longueur est supérieure au double du diamètre de la section oblongue, de sorte à rediriger efficacement les lignes du flux d'air de refroidissement pour leur imposer une direction vers l'arrière de l'appareil. En d'autres termes, la sortie 30 est un conduit d'une section déterminée orientée vers l'arrière, et d'une longueur supérieure au double de la petite dimension de la section de sortie, afin de rediriger correctement le flux d'air de refroidissement expulsé. Enfin, il est à noter que le flux d'air de refroidissement sort de la gaine de ventilation 15 par un orifice de sortie 17, passe au travers du patin élastique 41 creux et l'orifice 43 de l'élément de boîtier avant 44 qui sert également d'interface de positionnement du patin élastique 41 pour le positionnement de la gaine de ventilation 15 sur l'élément de boîtier avant 44. Les fonctions (positionnement et passage de ventilation) sont cumulées sur cette forme, ce qui permet de réduire le coût de la gaine de ventilation 15.

Dans l'exemple de réalisation illustré sur les figures, le moto-ventilateur 10 présente un axe de rotation faiblement incliné par rapport à la direction horizontale, l'inclinaison de l'axe de rotation du moto-ventilateur correspondant à l'inclinaison de l'axe d'entraînement 60.

L'invention concerne ainsi un appareil électroménager de préparation culinaire comprenant la base motorisée 100 avec la façade 20 agencée à l'avant de l'appareil. Le moto-ventilateur 10 crée lors de son fonctionnement un flux d'air de refroidissement du moto-ventilateur 10. La base motorisée 100 comprend des moyens de guidage d'air agencés autour du moto-ventilateur 10 pour guider le flux d'air de refroidissement depuis la première extrémité 11 du moto-ventilateur 10 vers la deuxième extrémité 12 du moto-ventilateur 10. Les moyens de guidage d'air sont les moyens de canalisation 14 agencés pour canaliser le flux d'air de refroidissement autour du moto-ventilateur 10 vers une sortie 30 orientée vers l'arrière de l'appareil et agencée pour imposer au flux d'air de refroidissement une direction d'expulsion vers l'arrière de l'appareil.

Dans l'exemple de réalisation illustré sur les figures, les moyens de canalisation 14 sont la gaine de ventilation 15 qui entoure complètement le moto-ventilateur 10 de sorte à le confiner dans la gaine de ventilation 15. La base motorisée 100 présente la plaque extérieure 21 de décor formant au moins partiellement la façade 20. La plaque extérieure 21 est métallique. Le flux d'air de refroidissement est canalisé par la gaine de ventilation 15 depuis la deuxième extrémité 12 du moto-ventilateur 10 vers la plaque extérieure 21 de décor qui redirige le flux d'air de refroidissement vers la sortie 30. La base motorisée 100 comprend le boîtier 40. La gaine de ventilation 15 comprend au moins un point de positionnement sur le boîtier 40, plus particulièrement l'appareil comprend le patin élastique 41 intercalé entre la gaine de ventilation 15 et le boîtier 40, audit point de positionnement. La gaine de ventilation 15 comprend l'orifice de sortie 17 du flux d'air de refroidissement agencé audit au moins un point de positionnement de la gaine de ventilation 15 sur le boîtier 40. A cet effet le boîtier 40 comporte un orifice 43 en regard de l'orifice de sortie 17 de la gaine de ventilation 15. Le flux d'air de refroidissement passe de l'orifice de sortie 17 de la gaine de ventilation 15 vers l'orifice 43 du boîtier 40 par le patin élastique 41 creux. La plaque extérieure 21 est fixée sur le boîtier 40 qui comporte une échancrure formant un espace entre la plaque extérieure 21 et l'orifice 43, de sorte que la sortie 30 et l'orifice 43 soient agencés sur la même pièce du boîtier 40. La sortie 30 est un conduit avec une section et une longueur prédéterminées, la section présentant au moins une dimension inférieure à la moitié de la longueur. La sortie 30 est agencée sous l'appareil. L'appareil comprend les pieds 50, 55 agencés pour définir un plan inférieur d'appui sur un plan de travail, plus particulièrement deux pieds 50 agencés sous la façade 20, la sortie 30 vers l'arrière étant agencée entre les deux pieds 50. L'appareil comprend l'axe d'entraînement 60 agencé pour entraîner au moins un outil de travail (non représenté). L'axe d'entraînement 60 est relié au moto-ventilateur 10 par le réducteur 70. L'axe d'entraînement 60 est agencé latéralement. Le moto-ventilateur 10 présente un axe de rotation s'étendant au moins principalement dans la direction horizontale.

On comprendra que diverses modifications et/ou améliorations évidentes pour l'homme du métier peuvent être apportées au mode de réalisation de l'invention décrit dans la présente description sans sortir du cadre de l'invention défini par les revendications annexées. En particulier, il est fait référence à des moyens de canalisation comportant une gaine de ventilation en une seule pièce, mais on peut envisager de réaliser les moyens de canalisation en plusieurs pièces, notamment un élément de boîtier supérieur et/ou un élément de boîtier inférieur.

## Revendications

1. Appareil électroménager de préparation culinaire comprenant une base motorisée (100) avec une façade (20) agencée à l'avant de l'appareil, la base motorisée (100) comprenant :
- un moto-ventilateur (10) qui crée lors de son fonctionnement un flux d'air de refroidissement du moto-ventilateur (10),
- des moyens de guidage d'air agencés autour du moto-ventilateur (10) pour guider le flux d'air de refroidissement depuis une première extrémité (11) du moto-ventilateur (10) vers une deuxième extrémité (12) du moto-ventilateur (10),
les moyens de guidage d'air étant des moyens de canalisation (14) agencés pour canaliser le flux d'air de refroidissement autour du moto-ventilateur (10) vers une sortie (30) orientée vers l'arrière de l'appareil et agencée pour imposer au flux d'air de refroidissement une direction d'expulsion vers l'arrière de l'appareil,
les moyens de canalisation (14) étant une gaine de ventilation (15) qui entoure complètement le moto-ventilateur (10) de sorte à le confiner dans la gaine de ventilation (15),
**caractérisé en ce que** la base motorisée (100) comprend un boîtier (40), **en ce que** la gaine de ventilation (15) comprend au moins un point de positionnement sur le boîtier (40), **en ce que** l'appareil comprend un patin élastique (41) intercalé entre la gaine de ventilation (15) et le boîtier (40), audit point de positionnement, **en ce que** la gaine de ventilation (15) comprend un orifice de sortie (17) du flux d'air de refroidissement, **en ce que** l'orifice de sortie (17) est agencé audit au moins un point de positionnement de la gaine de ventilation (15) sur le boîtier (40), qui comporte un orifice (43) en regard de l'orifice de sortie (17) de la gaine de ventilation (15), **en ce que** le patin élastique (41) est creux, et **en ce que** le flux d'air de refroidissement passe de l'orifice de sortie (17) de la gaine de ventilation (15) vers l'orifice (43) du boîtier (40) par le patin élastique (41) creux.

2. Appareil selon la revendication 1, **caractérisé en ce que** la base motorisée (100) présente une plaque extérieure (21) de décor formant au moins partiellement la façade (20), et **en ce que** le flux d'air de refroidissement est canalisé par la gaine de ventilation (15) depuis la deuxième extrémité (12) du moto-ventilateur (10) vers la plaque extérieure (21) de décor qui le redirige vers la sortie (30).

3. Appareil selon la revendication 2, **caractérisé en ce que** la plaque extérieure (21) est fixée sur le boîtier (40), et **en ce que** le boîtier (40) comporte une échancrure (47) formant un espace entre la plaque extérieure (21) et l'orifice (43), de sorte que la sortie (30) et l'orifice (43) soient agencés sur la même pièce du boîtier (40).

4. Appareil selon l'une des revendications 2 ou 3, **caractérisé en ce que** la plaque extérieure (21) est métallique.

5. Appareil selon l'une des revendications 1 à 4, **caractérisé en ce que** la sortie (30) est un conduit avec une section et une longueur prédéterminées, et **en ce que** la section présente au moins une dimension inférieure à la moitié de la longueur.

6. Appareil selon l'une des revendications 1 à 5, **caractérisé en ce qu'**il comprend des pieds (50, 55) agencés pour définir un plan inférieur d'appui sur un plan de travail.

7. Appareil selon l'une des revendications 1 à 6, **caractérisé en ce que** la sortie (30) est agencée derrière la façade (20).

8. Appareil selon l'une des revendications 1 à 7, **caractérisé en ce que** la sortie (30) est agencée sous l'appareil.

9. Appareil selon la revendication 6 ou l'une des revendications 7 ou 8 dans leur dépendance à la revendication 6, **caractérisé en ce qu'**il comprend deux pieds (50) agencés sous la façade (20) et **en ce que** la sortie (30) vers l'arrière est agencée entre les deux pieds (50).

10. Appareil selon l'une des revendications 1 à 9, **caractérisé en ce qu'**il comprend un axe d'entraînement (60) agencé pour entraîner au moins un outil de travail, et **en ce que** l'axe d'entraînement (60) est relié au moto-ventilateur (10) par un réducteur (70).

11. Appareil selon la revendication 10, **caractérisé en ce que** l'axe d'entraînement (60) est agencé latéralement.

12. Appareil selon l'une des revendications 1 à 11, **caractérisé en ce que** le moto-ventilateur (10) présente un axe de rotation s'étendant au moins principalement dans la direction horizontale.

## Patentansprüche

1. Elektrohaushaltsgerät zur Zubereitung von Speisen mit einem motorisierten Sockel (100) mit einer an der Vorderseite des Geräts angeordneten Wand (20), wobei der motorisierte Sockel (100) Folgendes umfasst:
- einen Gebläsemotor (10), der im Betrieb einen Luftstrom zur Kühlung des Gebläsemotors (10) erzeugt,
- Mittel zur Luftführung, die um den Gebläsemotor (10) herum angeordnet sind, um den Kühlungsluftstrom von einem ersten Ende (11) des Gebläsemotors (10) hin zu einem zweiten Ende (12) des Gebläsemotors (10) zu leiten,
wobei die Mittel zur Luftführung Leitungsmittel (14) sind, die so angeordnet sind, dass sie den Kühlungsluftstrom um den Gebläsemotor (10) herum zu einem zur Rückseite des Geräts hin ausgerichteten Auslass (30) leiten, der so angeordnet ist, dass er den Ausstoß des Kühlungsluftstroms in Richtung der Geräterückseite bewirkt,
wobei die Leitungsmittel (14) einen Lüftungskanal (15) bilden, der den Gebläsemotor (10) vollständig umgibt, so dass dieser im Lüftungskanal (15) eingeschlossen ist,
**dadurch gekennzeichnet, dass** der motorisierte Sockel (100) ein Gehäuse (40) umfasst, dass der Lüftungskanal (15) mindestens einen Positionierpunkt am Gehäuse (40) umfasst, dass das Gerät eine elastische Kufe (41) umfasst, die am genannten Positionierpunkt zwischen dem Lüftungskanal (15) und dem Gehäuse (40) eingefasst ist, dass der Lüftungskanal (15) eine Auslassöffnung (17) für den Kühlungsluftstrom umfasst, dass die Auslassöffnung (17) an mindestens einem Positionierpunkt des Lüftungskanals (15) am Gehäuse (40) angeordnet ist, das eine Öffnung (43) gegenüber der Auslassöffnung (17) des Lüftungskanals (15) aufweist, dass die elastische Kufe (41) ausgehöhlt ist und dass der Kühlungsluftstrom durch die Auslassöffnung (17) des Lüftungskanals (15) über die ausgehöhlte elastische Kufe (41) hin zu der Öffnung (43) des Gehäuses (40) strömt.

2. Gerät nach Anspruch 1, **dadurch gekennzeichnet, dass** der motorisierte Sockel (100) eine Dekor-Außenplatte (21) aufweist, die zumindest teilweise eine Wand (20) bildet, und dass der Kühlungsluftstrom durch den Lüftungskanal (15) von dem zweiten Ende (12) des Gebläsemotors (10) hin zu der Dekor-Außenplatte (21) geleitet wird, die ihn zum Auslass (30) hin umleitet.

3. Gerät nach Anspruch 2, **dadurch gekennzeichnet, dass** die Außenplatte (21) am Gehäuse (40) befestigt ist und dass das Gehäuse (40) eine Aussparung (47) umfasst, die einen Raum zwischen der Außenplatte (21) und der Öffnung (43) bildet, so dass der Auslass (30) und die Öffnung (43) an demselben Teil des Gehäuses (40) angeordnet sind.

4. Gerät nach einem der Ansprüche 2 oder 3, **dadurch gekennzeichnet, dass** die Außenplatte (21) aus Metall besteht.

5. Gerät nach einem der Ansprüche 1 bis 4, **dadurch gekennzeichnet, dass** der Auslass (30) einen Durchlass mit einem bestimmten Querschnitt und einer bestimmten Länge darstellt und dass der Querschnitt mindestens eine Abmessung aufweist, die weniger als die Hälfte der Länge beträgt.

6. Gerät nach einem der Ansprüche 1 bis 5, **dadurch gekennzeichnet, dass** es Füße (50, 55) umfasst, die so angeordnet sind, dass sie eine untere Standfläche auf einer Arbeitsfläche definieren.

7. Gerät nach einem der Ansprüche 1 bis 6, **dadurch gekennzeichnet, dass** der Auslass (30) hinter der Wand (20) angeordnet ist.

8. Gerät nach einem der Ansprüche 1 bis 7, **dadurch gekennzeichnet, dass** der Auslass (30) unter dem Gerät angeordnet ist.

9. Gerät nach Anspruch 6 oder nach einem der Ansprüche 7 oder 8 in ihrer Abhängigkeit von Anspruch 6, **dadurch gekennzeichnet, dass** es zwei Füße (50) umfasst, die unter der Wand (20) angeordnet sind und dass der Auslass (30) nach hinten zwischen den beiden Füßen (50) angeordnet ist.

10. Gerät nach einem der Ansprüche 1 bis 9, **dadurch gekennzeichnet, dass** es eine Antriebsachse (60) umfasst, die so angeordnet ist, dass sie zumindest ein Arbeitswerkzeug antreibt und dass die Antriebsachse (60) über ein Getriebe (70) mit dem Gebläsemotor (10) verbunden ist.

11. Gerät nach Anspruch 10, **dadurch gekennzeichnet, dass** die Antriebsachse (60) seitlich angeordnet ist.

12. Gerät nach einem der Ansprüche 1 bis 11, **dadurch gekennzeichnet, dass** der Gebläsemotor (10) eine Drehachse aufweist, die zumindest im Wesentlichen horizontal verläuft.

## Claims

1. Food preparation household electrical appliance comprising a motorised base (100) with a front panel (20) arranged in front of the appliance, the motorised base (100) comprising:
- an electric fan (10) which when running creates a cooling air flow from the electric fan (10),
- air guide means arranged around the electric fan (10) to guide the cooling air flow from a first end (11) of the electric fan (10) to a second end (12) of the electric fan (10),
the air guide means being channelling means (14) arranged to channel the cooling air flow around the electric fan (10) towards an outlet (30) directed towards the rear of the appliance and arranged to expel the cooling air flow towards the rear of the appliance,
the channelling means (14) being a ventilation duct (15) which completely surrounds the electric fan (10) so as to confine it in the ventilation duct (15), **characterised in that** the motorised base (100) comprises a housing (40), **in that** the ventilation duct (15) comprises at least one positioning point on the housing (40), **in that** the appliance comprises a resilient pad (41) inserted between the ventilation duct (15) and the housing (40), at said positioning point, **in that** the ventilation duct (15) comprises an outlet orifice (17) for the cooling air flow, **in that** the outlet orifice (17) is arranged at said at least one positioning point of the ventilation duct (15) on the housing (40), which comprises an orifice (43) opposite the outlet orifice (17) of the ventilation duct (15), **in that** the resilient pad (41) is hollow, and **in that** the cooling air flow passes from the outlet orifice (17) of the ventilation duct (15) towards the orifice (43) of the housing (40) through the hollow resilient pad (41).

2. Appliance according to claim 1, **characterised in that** the motorised base (100) has a decorative outer plate (21) forming at least partially the front panel (20), and **in that** the cooling air flow is channelled by the ventilation duct (15) from the second end (12) of the electric fan (10) towards the decorative outer plate (21) which redirects it to the outlet (30).

3. Appliance according to claim 2, **characterised in that** the outer plate (21) is fixed on the housing (40), and **in that** the housing (40) has a recess (47) forming a space between the outer plate (21) and the orifice (43), so that the outlet (30) and the orifice (43) are arranged on the same part of the housing (40).

4. Appliance according to claim 2 or 3, **characterised in that** the outer plate (21) is metallic.

5. Appliance according to one of claims 1 to 4, **characterised in that** the outlet (30) is a duct of predetermined cross-section and length, and **in that** at least one dimension of the cross-section is less than half the length.

6. Appliance according to one of claims 1 to 5, **characterised in that** it comprises feet (50, 55) arranged to define a lower support plane on a work surface.

7. Appliance according to one of claims 1 to 6, **characterised in that** the outlet (30) is arranged behind the front panel (20).

8. Appliance according to one of claims 1 to 7, **characterised in that** the outlet (30) is arranged underneath the appliance.

9. Appliance according to claim 6, or to claim 7 or 8 in their dependence on claim 6, **characterised in that** it comprises two feet (50) arranged under the front panel (20) and **in that** the outlet (30) towards the rear is arranged between the two feet (50).

10. Appliance according to one of claims 1 to 9, **characterised in that** it comprises a drive shaft (60) arranged to drive at least one working tool, and **in that** the drive shaft (60) is connected to the electric fan (10) by a gearbox (70).

11. Appliance according to claim 10, **characterised in that** the drive shaft (60) is arranged laterally.

12. Appliance according to one of claims 1 to 11, **characterised in that** the electric fan (10) has an axis of rotation extending at least substantially in the horizontal direction.
